# EUROPEAN PATENT APPLICATION

(11) **EP 1 583 066 A2**
(43) Date of publication of application: **05.10.2005**
(21) Application number: 05006481.5
(22) Date of filing: 24.03.2005
(51) Int. Cl.: G09G 3/28

(54) **Plasma display apparatus and image processing method thereof**

(30) Priority: 29.03.2004 KR 2004021350
(71) Applicant: LG ELECTRONICS INC., Seoul, 150-721 (KR)
(72) Inventor: Lee, Jun Hak, 2-dong,709 beonji,Jangan-gu, Suwon-si G. (KR)
(74) Representative: Rupprecht, Kay

(57) **Abstract**

The present invention relates to a plasma display apparatus and an image processing method thereof in which when the plasma display apparatus is driven, a picture quality is prevented from being degraded due to a line load. The plasma display apparatus for processing input video data to display an image, the apparatus includes: an inverse gamma correcting unit for correcting the video data into a previously stored gamma data, and linearly converting luminance depending on a gray level of a video signal; and a line load processor for compensating for a decreased amount of the luminance depending on an increase of a line load of a picture, which is displayed using the video data inputted from the inverse gamma correcting unit. The present invention compensates for the decreased amount of the luminance of the input video data, thereby reducing a line load effect.

## Description

This Nonprovisional application claims priority under 35 U.S.C. § 119(a) on Patent Application No. 10-2004-0021350 filed in Korea on March 29, 2004, the entire contents of which are hereby incorporated by reference.

### BACKGROUND OF THE INVENTION

### Field of the Invention

The present invention relates to a plasma display apparatus, and more particularly, to a plasma display apparatus and an image processing method thereof in which when the plasma display apparatus is driven, a picture quality is prevented from being degraded due to a line load.

### Description of the Background Art

In general, plasma display panel (Hereinafter, referred to as "PDP") includes a front substrate and a rear substrate formed of soda-lime glass, and a barrier rib defining one unit cell between the front substrate and the rear substrate. A main discharge gas such as neon (Ne), helium (He) or a combination of neon and helium (Ne + He) and an inert gas containing a small amount of xenon (Xe) are filled into each cell. When the inert gas is discharged due to a high frequency voltage, the inert gas generates vacuum ultraviolet rays and excites phosphor between the barrier ribs, thereby displaying an image.

Comparing with a cathode ray tube (CRT) being main display means, the PDP has a simple construction and therefore, its manufacture is easy. Comparing with the CRT, the PDP has a characteristic of thinning and large-sizing. Accordingly, the PDP is being currently highlighted as a next generation display device.

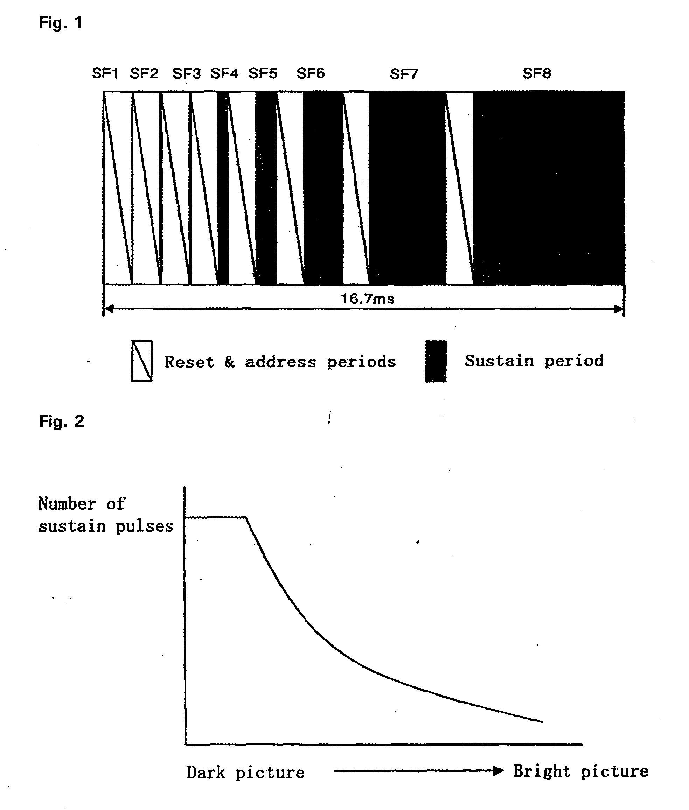

FIG. 1 is a view illustrating gray level expression in a conventional three-electrode alternate current surface discharge type plasma display panel.

As shown in FIG. 1, the gray level is expressed by dividing one frame into several sub-fields each having a different number of light emission time.

Each of the sub-fields is divided into a reset period for uniformly generating a discharge, an address period for selecting a discharge cell, and a sustain period for expressing the gray level depending on the number of discharge times. When the image is displayed in 256 gray levels, a frame period (16.67ms) corresponding to 1/60 second is divided into eight sub-fields (SF1 to SF8).

Each of the sub-fields is again divided into the reset period, the address period and the sustain period. The reset period and the address period are the same at each sub-field whereas the sustain period and the number of discharge times of the sustain pulse are increased in a ratio of 2ⁿ (n=0,1,2,3,4,5,6,7) at each sub-field. As such, the sustain period is different at each sub-field and therefore, the gray level can be expressed.

However, if the sustain pulses used are 255 in number to express the 256 gray levels, a picture becomes so dark and a picture quality becomes degraded. In order to display a bright and definite image, the number of the sustain pulses should be increased. If the number of the sustain pulses is increased through a whole picture, the PDP has a large power consumption. Therefore, a panel is not only damaged, but also a driving system becomes unstable. Accordingly, the conventional PDP controls the number of the sustain pulses depending on picture information as shown in FIG. 2.

FIG. 2 is a graph illustrating a relation of the number of the sustain pulses and brightness in the conventional plasma display panel.

As shown in FIG. 2, in the conventional PDP, as the brightness is increased, the number of the sustain pulses is decreased. In other words, when the picture is dark, the number of the sustain pulses is increased, thereby increasing a picture contrast. When the picture is bright, the number of the sustain pulses is decreased, thereby preventing a panel damage.

In the conventional PDP, when video data having the same gray level is displayed on a screen, luminance is decreased due to a line load. This is called "line load effect". The line load refers to a ratio of a turn-on line length to a total line length in one line unit of the panel.

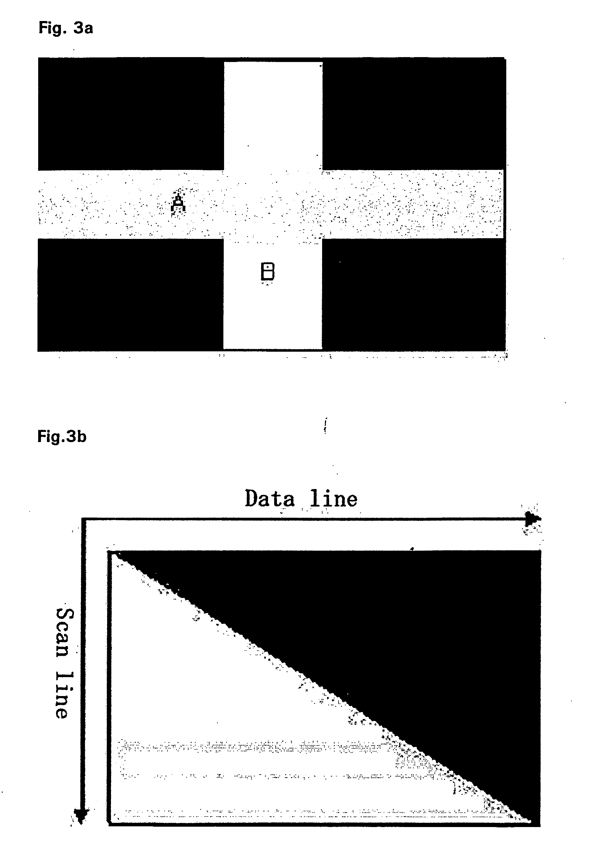

The line load effect occurs in the conventional PDP as shown in FIGs. 3A and 3B. FIG. 3A is a view illustrating the line load effect in the conventional plasma display panel, and FIG. 3B is a schematic view illustrating a decrease of the luminance depending on an increase of the line load.

As shown in FIG. 3A, more pixels are turned on at the same time in "A" line than "B" line. Therefore, power consumption is increased, thereby reducing the luminance. Accordingly, the line load effect where "A" region is darker than "B" region in brightness occurs.

As shown in FIG. 3B, on the assumption that the "A" line is a data line and the "B" line is a scan line, as the number of turn-on pixels is gradually increased in the data line, the brightness for the same gray level is decreased. In other words, there is a drawback in that a luminance difference gets worse due to the line load.

### SUMMARY OF THE INVENTION

Accordingly, an object of the present invention is to solve at least the problems and disadvantages of the background art.

An object of the present invention is to provide a plasma display apparatus and an image processing method thereof in which an image processing device can be improved, thereby reducing a line load effect and improving a picture quality.

To achieve these and other advantages and in accordance with the purpose of the present invention, as embodied and broadly described, there is provided a plasma display apparatus for processing input video data to display an image, the apparatus including: an inverse gamma correcting unit for correcting the video data into a previously stored gamma data, and linearly converting luminance depending on a gray level of a video signal; and a line load processor for compensating for a decreased amount of the luminance depending on an increase of a line load of a picture, which is displayed using the video data inputted from the inverse gamma correcting unit.

In another aspect of the present invention, there is provided an image processing method for processing input video data to display an image in a plasma display apparatus, the method including the steps of: (a) correcting the video data into a previously stored gamma data, and linearly converting luminance depending on a gray level of a video signal; and (b) compensating for a decreased amount of the luminance depending on an increase of a line load of a picture, which is displayed using the input video data.

### BRIEF DESCRIPTION OF THE DRAWINGS

The invention will be described in detail with reference to the following drawings in which like numerals refer to like elements.

FIG. 1 is a view illustrating expression of a gray level in a conventional plasma display panel;

FIG. 2 is a graph illustrating a relation of the number of sustain pulses and brightness in a conventional plasma display panel;

FIG. 3A is a view illustrating a line load effect in a conventional plasma display panel;

FIG. 3B is a schematic view illustrating a decrease of luminance depending on an increase of a line load;

FIG. 4 is a block diagram illustrating an image processing device of a plasma display panel according to an embodiment of the present invention;

FIG. 5 is a block diagram illustrating a line load processor according to an embodiment of the present invention;

FIG. 6 is a graph illustrating a line histogram distribution according to an embodiment of the present invention;

FIG. 7A is a graph illustrating a relation of a gray level and a line load according to an embodiment of the present invention; and

FIG. 7B is a graph illustrating a relation of luminance and a line load according to an embodiment of the present invention.

### DETAILED DESCRIPTION OF PREFERRED EMBODIMENTS

Preferred embodiments of the present invention will be described in a more detailed manner with reference to the drawings.

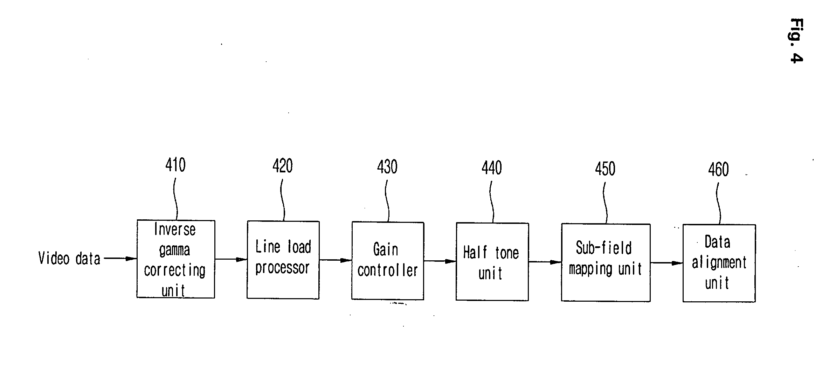

FIG. 4 is a block diagram illustrating an image processing device of a plasma display panel according to an embodiment of the present invention.

As shown in FIG. 4, in the inventive image processing device, input video data is processed and data corresponding to each sub-field is addressed to a panel in a line unit. The image processing device includes an inverse gamma correcting unit 410, a line load processor 420, a gain controller 430, a half tone unit 440, a sub-field mapping unit 450, and a data alignment unit 460.

In the inverse gamma correcting unit 410, the input video data is corrected into a previously stored gamma data to linearly convert luminance depending on a gray level of a video signal.

The line load processor 420 compensates for a decreased amount of the luminance depending on an increase of a line load of a picture, which is displayed using the video data inputted from the inverse gamma correcting unit 410. According to an embodiment of the present invention, as the line load of the video data is increased, the line load processor 420 increases the gray level of the video data and compensates for the decreased amount of the luminance. A detailed description thereof will be made afterwards.

The gain controller 430 amplifies the video data corrected in the line load processor 420, by an effective gain.

The half tone unit 440 adds noise to the data inputted from the gain controller 430, and adjusts the gray level in full detail, thereby enhancing expression of the gray level.

The sub-field mapping unit 450 maps the data, which is inputted from the half tone unit 440, to a predetermined sub-field pattern.

The data alignment unit 460 converts the data inputted from the sub-field mapping unit 450, suitably to a resolution format of the PDP, and supplies the converted data to an address-electrode driving integrated circuit (not shown) to display the image.

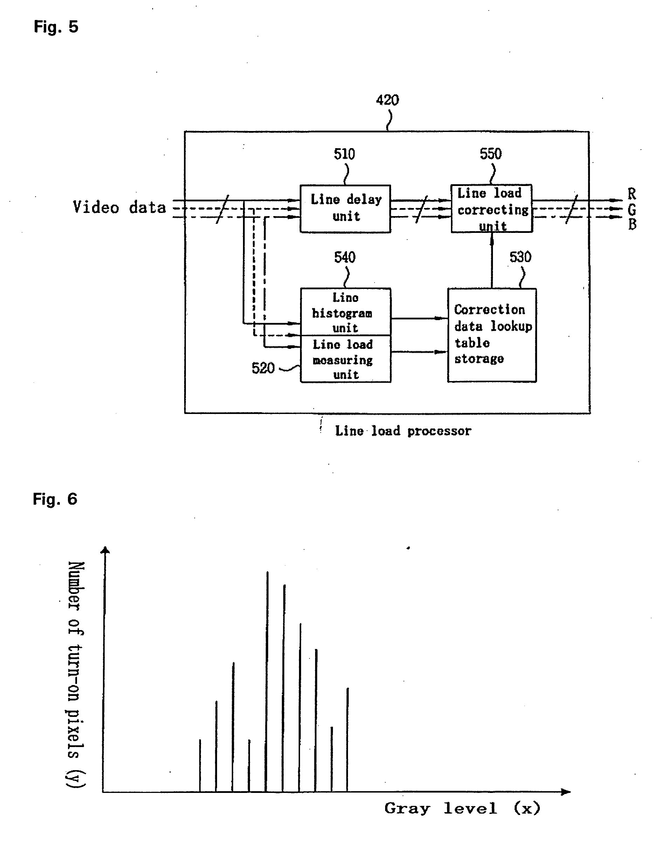

FIG. 5 is a block diagram illustrating the line load processor according to an embodiment of the present invention.

As shown in FIG. 5, the line load processor 420 compensates for the decreased amount of the luminance depending on the line load, and provides the corrected video data. The line load processor 420 includes a line delay unit 510, a line load measuring unit 520, a correction data lookup table storage 530, a line histogram unit 540, and a line load correcting unit 550.

The line delay unit 510 provides the video data to each part of the line load processor 420 in the line unit during one frame.

The line load measuring unit 520 measures the decreased amount of the luminance depending on the line load, in the line unit of the video data. The line load refers to a ratio of turn-on line length to a total line length in one line unit of the panel.

The correction data lookup table storage 530 generates correction data for compensating for the decreased amount of the luminance, and stores the generated correction data in a lookup table.

The line histogram unit 540 obtains a histogram distribution of the number of turn-on pixels depending on the gray level of the line unit data.

The line load correcting unit 550 selects the correction data corresponding to information, which is inputted from the line load measuring unit 520 and the line histogram unit 540, in the lookup table. The line load correcting unit 550 corrects the video data inputted from the inverse gamma correcting unit 410, using the selected correction data.

Algorithm of the inventive line load processor 420 is roughly described as follows.

The line load measuring unit 520 measures the decreased amount of the luminance depending on the line load in the line unit, and determines the correction data for compensating for the decreased amount of the luminance, to store the determined correction data in the correction data lookup table storage 530. At the same time, the line histogram unit 540 obtains the histogram distribution for one line data frame.

When one line data frame is inputted, the correction data is read from the correction data lookup table storage 530 using the line-unit load, which is transmitted from the line load measuring unit 520 and the line histogram unit 540. The line load correcting unit 550 corrects the input video data depending on the correction data. By such a line load correction, the decreased amount of the luminance depending on the line load can be compensated. Herein, the histogram distribution in one line will be in detail described in FIG. 6.

FIG. 6 is a graph illustrating the line histogram distribution according to an embodiment of the present invention.

As shown in FIG. 6, X-axis indicates the gray level, and Y-axis indicates the number of the turn-on pixels depending on the gray level in one line. Through the line histogram unit 540, the number of the turn-on pixels depending on each gray level is obtained. In other words, the line load depending on each gray level can be obtained.

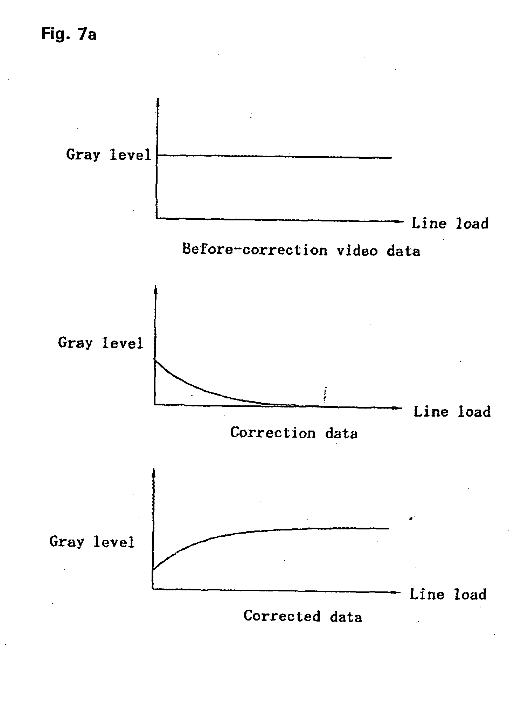

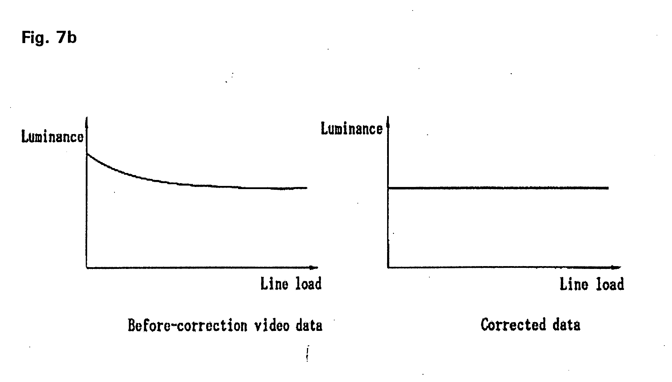

FIG. 7A is a graph illustrating a relation of the gray level and the line load according to an embodiment of the present invention, and FIG. 7B is a graph illustrating a relation of the luminance and the line load according to an embodiment of the present invention.

As shown in FIG. 7A, the line load correcting unit 550 subtracts the correction data from the before-correction video data to obtain the gray level for the line load of the corrected video data.

As shown in FIG. 7B, the graph shows the relation of the luminance and the line load when the video data is displayed on the panel. In the before-correction video data, as the line load is increased due to the line load effect, the luminance is decreased. In the corrected video data, as the line load is increased, the gray level can be increased, thereby fixing the luminance irrespective of the line load.

As described above, the inventive plasma display apparatus has an effect in that the line load depending on the input data can be reduced, thereby improving a picture quality.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A plasma display apparatus for processing input video data to display an image, the apparatus comprising:
an inverse gamma correcting unit for correcting the video data into a previously stored gamma data, and linearly converting luminance depending on a gray level of a video signal; and
a line load processor for compensating for a decreased amount of the luminance depending on an increase of a line load of a picture, which is displayed using the video data inputted from the inverse gamma correcting unit:

2. The apparatus of claim 1, wherein as the line load is increased, the line load processor increases the gray level of the video data and compensates for the luminance.

3. The apparatus of claim 1 or 2, wherein the line load processor comprises:
a line delay unit for providing the video data in a line unit;
a line load measuring unit for measuring the decreased amount of the luminance depending on the line load in the line unit of the video data;
a correction data lookup table storage for generating correction data for compensating for the decreased amount of the luminance, and storing the generated correction data in a lookup table; and
a line load correcting unit for selecting the correction data corresponding to information, which is inputted from the line load measuring unit, in the lookup table, to correct the video data inputted from the inverse gamma correcting unit using the selected correction data.

4. The apparatus of claim 3, wherein the line load processor has a line histogram unit for obtaining a histogram distribution of the number of turn-on pixels depending on the gray level of the line unit data.

5. The apparatus of claim 3, wherein the line load correcting unit subtracts a gray level of the correction data from the gray level of the video data to obtain corrected video data.

6. A plasma display apparatus comprising:
a line delay unit for providing video data in a line unit;
a line load measuring unit for measuring a decreased amount of luminance depending on a line load in the line unit of the video data;
a correction data lookup table storage for generating correction data for compensating for the decreased amount of the luminance, and storing the generated correction data in a lookup table;
a line histogram unit for obtaining a histogram distribution of the number of turn-on pixels depending on a gray level of the line unit data; and
a line load correcting unit for selecting the correction data in the lookup table, corresponding to an information that is inputted from the line load measuring unit and the line histogram unit, to correct the video data using the selected correction data.

7. The apparatus of claim 6, wherein the line load correcting unit subtracts a gray level of the correction data from the gray level of the video data to obtain corrected video data.

8. An image processing method for processing input video data to display an image in a plasma display apparatus, the method comprising the steps of:
(a) correcting the video data into a previously stored gamma data, and linearly converting luminance according to a gray level of a video signal; and
(b) compensating for a decreased amount of the luminance according to an increase of a line load of a picture, which is displayed using the input video data.

9. The method of claim 8, wherein in the step (b), as the line load is increased, the gray level of the video data is increased and the luminance is compensated.

10. An image processing method of a plasma display apparatus, the method comprising the steps of:
(a) providing video data in a line unit;
(b) measuring a decreased amount of luminance depending on a line load in the line unit of the video data;
(c) generating correction data for compensating for the decreased amount of the luminance, and storing the generated correction data in a lookup table; and
(d) selecting the correction data in the lookup table to correct the video data.

11. The method of claim 10, further comprising the step of: in the step (b), obtaining a histogram distribution of the number of turn-on pixels depending on a gray level of the line unit data.

12. The method of claim 10, further comprising the step of: in the step (d), subtracting a gray level of the correction data from the gray level of the video data to correct the video data.
